# EUROPÄISCHE PATENTSCHRIFT

(11) **EP 2 621 668 B1**
(45) Veröffentlichungstag und Bekanntmachung des Hinweises auf die Patenterteilung: **18.03.2015**
(21) Anmeldenummer: 11763940.1
(22) Anmeldetag: 30.09.2011
(51) Int. Cl.: B23Q 1/01, B23Q 37/00

(54) **HALTERUNGSMODUL FÜR FERTIGUNGS- UND/ODER MONTAGEKOMPONENTEN EINER BEARBEITUNGSANLAGE SOWIE EINE MIT EINEM SOLCHEN HALTERUNGSMODUL AUSGESTATTETE BEARBEITUNGSANLAGE**
SUPPORT MODULE FOR PRODUCTION COMPONENTS AND/OR ASSEMBLY COMPONENTS OF A PROCESSING UNIT AND A PROCESSING UNIT EQUIPPED WITH SUCH A SUPPORT MODULE
MODULE DE SUPPORT DES ÉLÉMENTS DE FABRICATION ET/OU DE MONTAGE D'UNE INSTALLATION DE TRAITEMENT ET INSTALLATION DE TRAITEMENT ÉQUIPÉE DUDIT MODULE DE SUPPORT

(30) Priorität: 01.10.2010 DE 102010041864
(43) Veröffentlichungstag der Anmeldung: 07.08.2013
(73) Patentinhaber: Otto Bihler Handels-Beteiligungs-GmbH, 87642 Halblech (DE)
(72) Erfinder: KÖPF, Johann, 87642 Halblech (DE)
(74) Vertreter: Tiesmeyer, Johannes
(86) Internationale Anmeldenummer: PCT/EP2011/067140
(87) Internationale Veröffentlichungsnummer: WO 2012/042029

(56) Entgegenhaltungen:
- NL-C- 1 036 237
- US-A- 5 904 242
- US-B1- 7 918 333

## Beschreibung

Die Erfindung betrifft ein Halterungsmodul für Fertigungs- und/oder Montagekomponenten einer Bearbeitungsanlage, welches als prismatischer, insbesondere quaderförmiger Hohlblock ausgebildet ist, der einander entgegengesetzte Grundseiten, Prismenseitenflächen zwischen den Grundseiten und einen sich von Grundseite zu Grundseite erstreckenden Hohlraum aufweist, wobei die Prismenseitenflächen von Prismenseitenkanten und die Grundseiten von quer zu den Prismenseitenkanten verlaufenden Prismengrundkanten begrenzt sind, wobei an mehreren Prismenseitenflächen ein vorbestimmtes Befestigungsraster von präparierten Befestigungsstellen für den Anbau der Komponenten vorhanden ist, welches wenigstens eine sich parallel zu einer Prismenseitenkante des Halterungsmoduls erstreckende Reihe von Befestigungslöchern mit einem vorbestimmten Lochabstand voneinander aufweist, wobei ferner in jeder der mit dem vorbestimmten Befestigungsraster versehenen der Prismenseitenflächen wenigstens ein von den Befestigungsstellen gesondertes in den Hohlraum mündendes Durchgriffsloch vorgesehen ist.

Bearbeitungsanlagen der hier betrachteten Art werden zur Massenfertigung- und/oder Montage von Bauteilen und Baugruppen eingesetzt, wobei die Fertigungs- und/oder Montagevorgänge z.B. Schritte des Materialzuführens, des Materialtrennens, des Materialumformens, des Bohrens, des Gewindeformens, des Verbindens durch Schweißen, Löten, Kleben, Verschrauben oder Nieten, des Bedruckens usw. umfassen können.

Beispiele für Produkte, die üblicherweise mit solchen Bearbeitungsanlagen hergestellt werden, sind Schlauchschellen, Fenster- und Türbeschläge, Gürtelschnallen, Möbelbeschläge, Schlossteile, elektrische Kontaktverbindungselemente, wie Stecker und Steckdosen, Zündkerzen usw. Bei der Herstellung solcher Massenteile können unterschiedliche Materialien zum Einsatz kommen, insbesondere Metalle und Kunststoffe.

Entsprechend der großen Vielfalt an unterschiedlichen Formen, Abmessungen und Zusammensetzungen der mit solchen Bearbeitungsanlagen herzustellenden Produkte sind Bearbeitungsanlagen gefragt, die an die Anforderungen zur Herstellung eines jeweiligen spezifischen Produktes leicht individuell anpassbar sind.

So sind unter anderem Bearbeitungsanlagen bekannt, die Fertigungs- und/oder Montagekomponenten aufweisen, die numerisch steuerbar sind, also computergesteuerte und somit programmierbare NC-Bearbeitungsmodule. Eine gewisse Flexibilität beim Einrichten einer Bearbeitungsanlage ergibt sich dadurch, dass die NC-Bearbeitungsmodule ihrer spezifischen Aufgabe entsprechend programmiert werden können. Auch ist es bekannt, solche NC-Module, etwa Biegeschlitten oder dgl. an einem gemeinsamen Maschinenrahmen etwa in Form einer massiven Montageplatte vorzusehen, welche ein Lochraster für die Anmontage solcher Module an betreffenden Befestigungsstellen aufweist. Die hier betrachteten Fertigungs- und/oder Montagekomponenten sind üblicherweise an Versorgungsleitungen, wie etwa Energieversorgungsleitungen und/oder Datenleitungen und/oder Fluidleitungen angeschlossen, so dass insbesondere bei Bearbeitungsanlagen mit einer größeren Anzahl an Fertigungs- und/oder Montagekomponenten eine geordnete und platzsparende Verlegung solcher Versorgungsleitungen schwierig ist.

Eine Bearbeitungsanlage mit gattungsgemäßen Halterungsmodulen ist aus der US 5,904,242 A bekannt. Mehrere solcher prismatischer Halterungsmodule nach US 5,904,242 A sind der Länge nach in Reihe aneinander angefügt, um ein verlängertes Halterungssystem für Fertigungs- und/oder Montagekomponenten zu bilden. Diese können unter Berücksichtigung des Befestigungsrasters der einzelnen Halterungsmodule in bestimmten Anordnungen daran befestigt werden.

Aus der NL 1 036 237 C ist ein Baukastensystem aus einer Vielzahl von Grundelementen und Verbindungselementen zum Aufbau von Prototypen diverser Vorrichtungen bekannt. Eine Grundplatte und auch weitere Grundelemente des Baukastensystems weisen eine gleichmäßige Verteilung von Löchern über ihre kompletten Flachseiten hinweg auf, wobei diese Löcher für die Durchführung von Schrauben vorgesehen sind. Die Löcher sind in einem vorbestimmtem Raster aus Lochreihen angeordnet, wobei die randständigen Lochreihen um einen halben Lochabstand von den betreffenden Randkanten beabstandet sind.

Der vorliegenden Erfindung liegt die Aufgabe zugrunde, die Flexibilität einer solchen Bearbeitungsanlage im Hinblick auf die Anpassbarkeit an produktspezifische Bearbeitungserfordernisse der herzustellenden Teile zu vergrößern.

Ausgehend von einem Halterungsmodul mit den Merkmalen des Oberbegriffs des Anspruchs 1 wird zur Lösung dieser Aufgabe erfindungsgemäß vorgeschlagen, dass jede Prismenkante in ihrer jeweiligen Länge einem ganzzahligen Vielfachen des den vorbestimmten Lochabstand entsprechenden kleinsten Rastermaßes des Befestigungsrasters entspricht, dass die den Prismengrundkanten des Halterungsmoduls nächstliegenden Befestigungslöcher des Befestigungsrasters einen halben Lochabstand zu den betreffenden Prismengrundkanten haben und dass auch der Abstand der randständigen Befestigungslochreihen von der jeweiligen nächst benachbarten Prismenseitenkante dem halben Lochabstand entspricht, wobei das Halterungsmodul so gestaltet ist, dass es mit wenigstens einem identischen Halterungsmodul n unterschiedlichen auswählbaren Positionen, insbesondere in einer Reihenanordnung, einer Über-Eck-Anordnung oder einer T-Anordnung, zu einem modularen Halterungssystem zusammenfügbar ist, wobei ein Befestigungsraster von Befestigungsstellen des Halterungsmoduls systematisch an ein Befestigungsraster von Befestigungsstellen des identischen anderen Halterungsmoduls unter Aufrechterhaltung eines bestimmten Befestigungsrastermaßes am Übergang zwischen den Halterungsmodulen anschließbar ist.

Die Halterungsmodule nach der Erfindung sind so gestaltet, dass sie aneinander gefügt und zu einem Halterungssystem kombiniert werden können, welches die Anbringung verschiedener Fertigungs- und/oder Montagekomponenten an den Befestigungsstellen in verschiedensten Positionen ermöglicht, so dass die Anpassung einer mit einem solchen modularen Halterungssystem oder einem solchen Halterungsmodul ausgestatteten Bearbeitungsanlage an spezifische Bearbeitungsvorgänge durch entsprechende Anordnung der Fertigungs- und/oder Montagekomponenten an präparierte Befestigungsstellen flexibel und einfach möglich ist, wobei dies insbesondere im Zusammenhang mit der Verwendung individuell steuerbarer Fertigungs- und/oder Montagekomponenten, wie etwa NC-Bearbeitungsmodulen, zutrifft. Vorzugsweise umfasst das Halterungsmodul Mittel zu seiner Fixierung an einem Basisrahmen oder Fundament einer betreffenden Bearbeitungsanlage.

Der Hohlraum des Halterungsmoduls dient als Leitungs- und Kabelkanal für Versorgungsleitungen von Fertigungs- und/oder Montagekomponenten. Bei solchen Versorgungsleitungen kann es sich um Stromversorungsleitungen, Datenleitungen, Hydraulikleitungen, Pneumatikleitungen, Kühlmittelleitungen etc. handeln. Das Halterungsmodul nach der Erfindung ist so gestaltet, dass eine geschützte und platzsparende Verlegung solcher Versorgungsleitungen auf einfache Weise möglich ist. Diesem Zweck dienen auch die Durchgriffslöcher, durch die hindurch die in dem Hohlraum verlegten Versorgungsleitungen nach außen zu den daran angeschlossenen Fertigungs- und/oder Montagekomponenten geführt werden können. Insbesondere in dem bevorzugten Fall mehrerer über die Länge des Halterungsmoduls verteilter Durch-griffslöcher ergibt sich somit die Möglichkeit, außerhalb des Hohlraums zu den Fertigungs- und/oder Montagekomponenten an dem Halterungsmodul verlaufende Versorgungsleitungsabschnitte sehr kurz zu halten, also auf kurzem Weg von einer jeweiligen Fertigungs- und/oder Montagekomponente am Halterungsmodul in den Hohlraum einzuführen. Eine solche platzsparende und geordnete Leitungsführung lässt Raum für eine möglichst optimierte Anordnung einer größeren Anzahl an Fertigungs- und/oder Montagekomponenten an dem Halterungsmodul. Die im Einsatz des Halterungsmoduls in einer Bearbeitungsanlage in dem Hohlraum gebündelten Versorgungsleitungen können durch wenigstens eine offene Grundseite des Hohlblocks nach außen oder ggf. in den Hohlraum eines angeschlossenen weiteren Halterungsmoduls geführt sein. Für die Ableitung solcher Versorgungsleitungen nach außen können bedarfsweise auch Durchgriffslöcher verwendet werden. Die Durchgriffslöcher sollten entsprechend groß dimensioniert sein und einen Mindestdurchmessermaß von 0,07 m nicht unterschreiten, dies auch, damit ein Monteur mit einer Hand durch ein solches Durchgriffsloch hindurch in den Hohlraum des Halterungsmoduls reichen kann, um auf etwaige Versorgungsleitungen in dem Hohlraum zugreifen oder Montageoperationen in dem Hohlraum ausführen zu können, etwa das Halten einer Kontermutter eines durch ein Befestigungsloch geführten Schraubbolzens einer Fertigungs- und/oder Montagekomponente.

Bei den Befestigungsstellen kann es sich zusätzlich zu Befestigungslöchern um Befestigungsstifte oder/und Befestigungshaken oder/und Spannelemente oder dgl. handeln, wobei ein Befestigungsraster aus Befestigungslöchern bevorzugt wird.

Die Befestigungslöcher können Durchtrittslöcher sein, also in den Hohlraum münden. Sie können mit einem Innengewinde präpariert sein oder zur Aufnahme von Passhülsen dimensioniert sein. In weiteren Ausführungsformen können die Befestigungslöcher z.B. Sackbohrungen sein.

Vorzugsweise haben die Halterungsmodule nach der Erfindung eine annähernd quaderförmige Gestalt, so dass mehrere identische Halterungsmodule nach der Erfindung leicht in unterschiedlichen Standardanordungen zu einem modularen Halterungssystem zusammengesetzt werden können. Beispiele für solche Standardanordungen sind die Reihenanordnung, die 90°-Winkelanordnung, die T-Anordung, die U-Anordnung, die Rechteck-Anordnung. Grundsätzlich können Halterungsmodule nach der Erfindung auch so gestaltet sein, dass sie z.B. orthogonal zueinander in drei Raumrichtungen zu einem räumlich verzweigten Halterungssystem aneinander gefügt und kombiniert werden können.

Die Flexibilität eines solchen modularen Halterungssystems wird noch vergrößert, indem mehrere Prismenseitenflächen des Halterungsmoduls, also vorzugsweise mehrere Quaderseitenflächen, ein vorbestimmtes Befestigungsraster von präparierten Befestigungsstellen aufweisen, wobei es sich dabei in der schon erwähnten Weise um Befestigungslöcher oder/und Befestigungsstifte oder/und Befestigungshaken oder/und Spannelemente oder dgl., für den Anbau der Komponenten handelt. Vorzugsweise sind die Befestigungsraster an allen damit ausgestatteten Prismenseitenflächen des Halterungsmoduls identisch. Gemäß einer weiterhin bevorzugten Variante der Erfindung entspricht die Länge der Prismenseitenkanten einem ganzzahligen Vielfachen der Länge der Prismengrundkanten des Halterungsmoduls. Insgesamt ist es vorteilhaft, dass die Prismenkanten einem jeweiligen ganzzahligen Vielfachen eines kleinsten Rastermaßes d des Befestigungsrasters entsprechen.

Gemäß der vorliegenden Erfindung ist das Halterungsmodul so gestaltet, dass es mit wenigstens einem identischen Halterungsmodul zu einem modularen Halterungssystem zusammenfügbar ist, wobei ein Befestigungsraster von Befestigungsstellen des Halterungsmoduls systematisch an ein Befestigungsraster von Befestigungsstellen des identischen anderen Halterungsmoduls unter Aufrechterhaltung eines bestimmten Befestigungsrastermaßes am Übergang zwischen den Halterungsmodulen anschließbar ist. Eine solche Lösung erlaubt das Anbringen von Fertigungs- und/oder Montagekomponenten über die Übergangsstelle zwischen den Halterungsmodulen hinweg an Befestigungsstellen beider Halterungsmodule ohne Aufgabe der Orientierung an einem vorbestimmten Rastermaß bzw. Rasterbild.

Das Befestigungsraster des Halterungsmoduls weist eine sich parallel zu einer Prismenseitenkante des Halterungsmoduls erstreckende Reihe von Befestigungslöchern mit einem vorbestimmtem Lochabstand auf, wobei die den Prismengrundkanten des Halterungsmoduls nächstliegenden Befestigungslöcher einen halben Lochabstand zu den betreffenden Prismengrundkanten haben und wobei auch der Abstand der randständigen Befestigungslochreihen von der jeweiligen nächstbenachbarten Prismenseitenkante dem halben Lochabstand entspricht. Zwei identische Halterungsmodule dieser Bauart können so zu einem modularen Halterungssystem aneinander gefügt werden, dass der Rastermaß-Lochabstand über die Verbindungsstelle hinweg aufrecht erhalten bleibt.

Eine Weiterbildung des Halterungsmoduls ist dadurch gekennzeichnet, dass das Befestigungsraster mindestens vier sich parallel zu einer Prismenseitenkante des Halterungsmoduls erstreckende Reihen von Befestigungslöchern aufweist und dass diese Befestigungslochreihen symmetrisch in Bezug zu einer zu den Prismenseitenkanten parallelen Ebene verlaufen, die die mit den Befestigungslochreihen versehene Prismenseitenfläche mittig teilt und orthogonal dazu verläuft. Vorzugsweise entsprechen die Abstände zwischen den Lochreihen einem ganzzeiligen Vielfachen des Rastermaßes und somit des Lochabstandes zwischen zwei Löchern einer jeweiligen Reihe. Ferner ist es bevorzugt, dass die Lochreihen identische Lochabstände und Lochdurchmesser aufweisen. Ein solches Befestigungslochbild definiert ein Befestigungsstellenraster, welches leicht an standardisierte Befestigungsmaße anzubringender Fertigungs- und/oder Montagekomponenten anpassbar ist.

Eine große Vielfalt an Anbaumöglichkeiten erlaubt eine Ausführungsform des Halterungsmoduls nach der Erfindung, gemäß welcher alle Prismenseitenflächen des Prismenmantels, also im Falle des Quaders alle vier aneinander angrenzende Quaderseitenflächen des Halterungsmoduls mit identischen Befestigungsrastern präpariert sind, wobei ein Befestigungsraster ggf. auch zur Montage des Halterungsmoduls an einem Basisrahmen der Bearbeitungsanlage verwendet werden kann und somit die betreffenden Mittel zur Fixierung des Halterungsmoduls am Basisrahmen bereitstellt.

Gemäß einer in Praxisversuchen bewährten Ausführungsform sind drei aneinander grenzende Quaderseitenflächen des in diesem Fall quaderförmigen Halterungsmoduls mit identischen Befestigungsrastern präpariert, wobei die verbleibende Quaderseitenfläche Mittel zur Fixierung des Halterungsmoduls an dem Basisrahmen der Bearbeitungsanlage aufweist. Eine demgegenüber abgewandelte Ausführungsform weist an mehreren Quaderseitenflächen Befestigungsraster auf, von denen jedoch wenigstens zwei unterschiedlich sind.

Vorzugsweise handelt es sich bei dem Halterungsmodul um ein einstückiges hohles Metallgussteil, vorzugsweise Stahlgussteil. In anderen Ausführungsformen kann das Halterungsmodul z.B. aus Plattenelementen gebildet sein. Hierbei handelt es sich z.B. um miteinander verschweißte Metallplattenelemente, etwa aus Stahl.

Eine Weiterbildung der Erfindung sieht vor, dass das einen Hohlraum enthaltende Halterungsmodul in den Prismenseitenwänden eine ein Raster aus sich parallel zu den Prismenseitenkanten erstreckenden mittigen Lochreihe von Durchgriffslöchern aufweist. Diese Durchgriffslöcher sollten jedes für sich groß genug sein, dass ein Monteur durch ein betreffendes Durchgriffsloch hindurch in das Innere des Halterungsmoduls eingreifen kann.

Ferner dienen die Durchgriffslöcher in der schon erwähnten Weise zur Durchführung von Leitungen, etwa elektrischen Leitungen, Datenkabeln, Schmiermittelleitungen, Kühlmittelleitungen, Pneumatikleitungen und dgl., die an Fertigungs- und/oder Montagekomponenten außen an dem Halterungsmodul angeschlossen sind und im weiteren Verlauf innerhalb des Hohlraums des Halterungsmoduls geschützt verlegt sind. Die Durchgriffslochreihen sind vorzugsweise in einer nach außen offenen Nut vorgesehen, die sich parallel zu den Prismenseitenkanten in der Mitte einer betreffenden Prismenseitenfläche erstreckt. Diese Nut kann bei Bedarf eine Blendenleiste aufnehmen, welche die Durchgriffslöcher nach außen verschließt. Gegenstand der Erfindung ist auch eine Bearbeitungsanlage mit einem Halterungssystem aus wenigstens einem erfindungsgemäßen Halterungsmodul, wobei die Bearbeitungsanlage einen Basisrahmen umfasst, an dem das Halterungsmodul in vorbestimmter Ausrichtung fixiert ist. Ferner weist die Bearbeitungsanlage Fertigungs- und/oder Montagekomponenten auf, die an präparierten Befestigungsstellen des Halterungsmoduls in vorbestimmter Anordnung betriebsbereit montiert sind, wobei zumindest einige der Fertigungs- und/oder Montagekomponenten an Versorgungsleitungen angeschlossen sind, welche durch Durchgriffsöffnungen des Halterungsmoduls hindurch in den Hohlraum geführt sind. Die Fertigungs- und/oder Montagekomponenten sind dazu eingerichtet, der betreffenden Fertigungs- und/oder Montageaufgabe entsprechende Bearbeitungsvorgänge durchzuführen. Vorzugsweise umfasst die Bearbeitungsanlage mehrere zu einem Halterungssystem aneinander gefügte Halterungsmodule nach der Erfindung.

Die Fertigungs- und/oder Montagekomponenten können z.B. NC-Fertigungs- und Montagemodule, die individuell programmierbar oder von einer Steuereinrichtung steuerbar sind, umfassen.

Vorzugsweise umfassen die Fertigungs- und/oder Montagekomponenten Module aus der folgenden Gruppe: Schweißmodul, Gewindeformungsmodul, Schraubmodul, Zuführmodul, Einzugsmodul, Pick- & Place-Modul, Bearbeitungslaser, Presse, Kaltumformungsmodul, insbesondere Biegemodul oder Stanzmodul, Isoliermodul, Lötmodul, Klebemodul, Kunststoffspritzmodul, Beschriftungsmodul, Messmodul, Kameramodul, Kontrollmodul.

Gemäß einer Weiterbildung der Bearbeitungsanlage nach der Erfindung mit mehreren Halterungsmodulen sind sämtliche Halterungsmodule gleich ausgebildet. Eine alternative Variante sieht jedoch vor, dass Halterungsmodule unterschiedlicher, aber aufeinander abgestimmter Größen ein modulares Halterungssystem bilden. Die Größenabstimmung kann z.B. so sein, dass Halterungsmodule sich nur in ihrer Prismenseitenkantenlänge unterscheiden, wobei die Länge eines größeren Moduls einem ganzzahligen Vielfachen der Länge eines kleinsten Grundmoduls entspricht.

Ausführungsbeispiele der Erfindung werden unter Bezugnahme auf die Figuren näher erläutert.
- Fig. 1: zeigt in einer perspektivischen Darstellung ein Halterungsmodul nach der Erfindung auf einem Basisrahmen einer im Übrigen nicht dargestellten Bearbeitungsanlage;
- Fig. 2: zeigt ein modulares Halterungssystem aus zwei in einer T-Anordnung aneinander gefügten Halterungsmodulen der in Fig. 1 gezeigten Bauweise auf einem betreffenden Basisrahmen einer im Übrigen nicht dargestellten Bearbeitungsanlage;
- Fig. 3: zeigt zwei Halterungsmodule der in Fig. 1 gezeigten Bauart in ei ner Über-Eck-Winkelanordnung auf einem betreffenden Basisrahmen einer im Übrigen nicht dargestellten Bearbeitungsanlage;
- Fig. 4: zeigt eine Reihenanordnung aus drei zu einem modularen Halterungssystem aneinander angefügten Halterungsmodulen der in Fig. 1 gezeigten Bauart auf einem Basisrahmen einer im Übrigen nicht dargestellten Bearbeitungsanlage.
- Fig. 5: zeigt eine aufrecht positionierte Rechteckanordnung aus vier zu einem modularen Halterungssystem aneinander angefügten Halterungsmodulen der in Fig. 1 gezeigten Bauart auf einem Basisrahmen einer im Übrigen nicht dargestellten Bearbeitungsanlage.
- Fig. 6 und Fig. 7: zeigen eine Bearbeitungsanlage nach der Erfindung in perspektivischer Darstellung aus zwei entgegengesetzten Blickrichtungen.

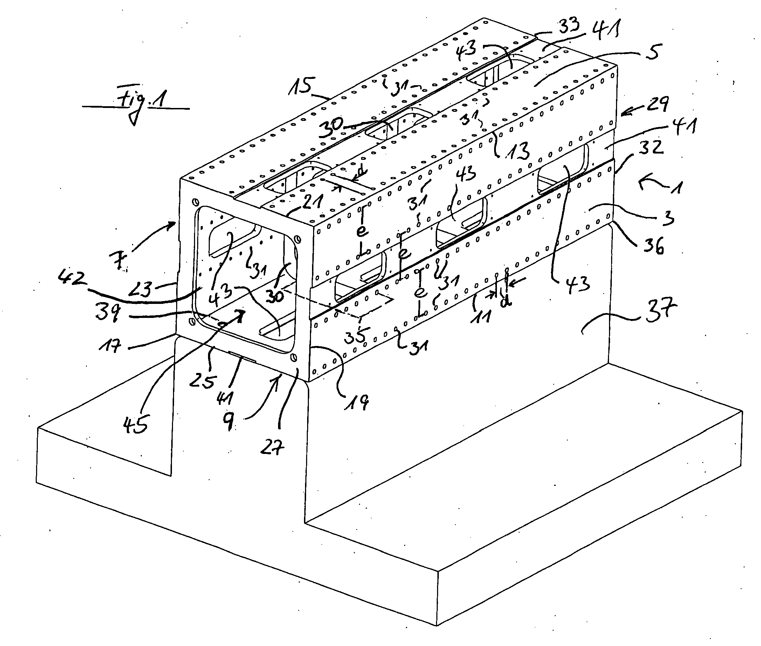

Das in Fig. 1 perspektivisch dargestellte Halterungsmodul 1 hat die Basisform eines Prismas, und zwar im Beispielsfall eines Quaders mit Prismenseitenflächen 3, 5, 7, 9, Prismenseitenkanten 11, 13, 15, 17 und Prismengrundkanten 19, 21, 23, 25, 32, 33, 34, 36 an den Grundseiten 27, 29.

Das kastenartige Halterungsmodul 1 ist im Beispielsfall ein einstückiges hohles Stahlgußteil mit den Quadermaßen 500 mm x 500 mm x 1500 mm. Die Prismenseitenkanten haben somit die dreifache Länge der Prismengrundkanten. In dem Hohlraum 45 des Halterungsmoduls 1 sind zu den Grundseiten 27, 29 parallele Aussteifungsrippen 30 vorgesehen.

In jeder der Prismenseitenflächen 3, 5, 7, 9 sind vier gleichartige Reihen von Befestigungslöchern 31 vorgesehen.

Die Befestigungslochreihen erstrecken sich parallel zu den Seitenkanten 11, 13, 15, 17 des Halterungsmoduls und weisen gleich große Löcher 31 mit gleich großem Lochabstand d entsprechend dem Rastermaß von im Beispielsfall 50 mm auf. Die Befestigungslochreihen der Quaderseitenfläche 3 verlaufen symmetrisch in Bezug auf eine zu den Prismenseitenkanten 11, 13 parallele Mittelebene 35. Die Befestigungsraster der Quaderseitenflächen 3, 5 und 7 sind identisch, so dass entsprechende Symmetrien der Lochreihen auch für die Seitenflächen 5 und 7 vorliegen. Vorzugsweise handelt es sich bei den Befestigungslöchern 31 um Löcher mit einem Durchmesser von z.B. 10-15 mm für die Aufnahme von Passhülsen, die zur zentrierten Aufnahme von Befestigungsschrauben für die Anbringung von Fertigungs- und/oder Montagekomponenten dienen. Die Befestigungslöcher können Gewinde aufweisen oder einfach für das Durchstecken von Schraubbolzen vorgesehen sein.

Der Abstand e zwischen den Lochreihen einer jeweiligen Quaderseitenfläche 3, 5, 7 entspricht einem ganzseitigen Vielfachen des Rastermaßes d. Im Beispielsfall ist e = 150 mm.

Die auf dem Basisrahmen 37 aufliegende Quaderseitenfläche 9 des Halterungsmoduls 1 weist nicht das Befestigungsraster der anderen Quaderseitenflächen 3, 5, 7 auf, sondern ein eigenes Raster von Befestigungslöchern 39, welches an ein komplementäres Befestigungsraster des Basisrahmens 37 angepasst ist. In einer alternativen Ausführungsform des Halterungsmoduls 1 könnte jedoch auch die Quaderseitenfläche 9 mit einem Befestigungsraster ausgestaltet sein, welches dem der anderen Quaderseitenflächen 3, 5, 7 entspricht.

Mittig und parallel zu den Seitenkanten 11, 13 erstreckt sich längs der Quaderseitenfläche 3 eine Außennut 41 in welcher drei Durchgriffslöcher 43 äquidistant vorgesehen sind. Solche Durchgriffslöcher 43 sind an entsprechenden Stellen ebenfalls in den anderen Quaderseitenflächen 5, 7 und 9 vorgesehen. Sie erlauben einen Zugriff auf den inneren Hohlraum 45 des Halterungsmoduls 1, d.h. sie sind so groß, dass ein Monteur mit der Hand durch die Durchgriffsöffnungen 43 hindurch greifen kann. Im Beispielsfall haben die Durchgriffslöcher 43 näherungsweise Rechteckform mit den Maßen 100 mm x 250 mm (Höhe x Breite). Das kleinste Durchmessermaß (hier die Höhe) sollte bei einem Durchgriffsloch 43 nicht kleiner als 70 mm sein. Die Durchgriffsöffnungen 43 dienen auch zur Durchführung von Leitungen, die im übrigen auch teilweise längs der Nuten 41 verlegt sein können und üblicherweise an Fertigungs- und/oder Montagekomponenten angeschlossen sind.

Die Nuten 41 können bedarfsweise mit einer darin einzulegenden Blendenleiste nach außen abgedeckt werden, um die Durchgriffslöcher 43 nach außen zu verschließen.

An den Grundseiten (Stirnseiten) 27, 29 ist das Halterungsmodul 1 zum Hohlraum 45 hin weitgehend offen, d.h. es weist Öffnungen 42 auf, die im Beispielsfall um ein Vielfaches größer sind als die Durchgriffsöffnungen 43.

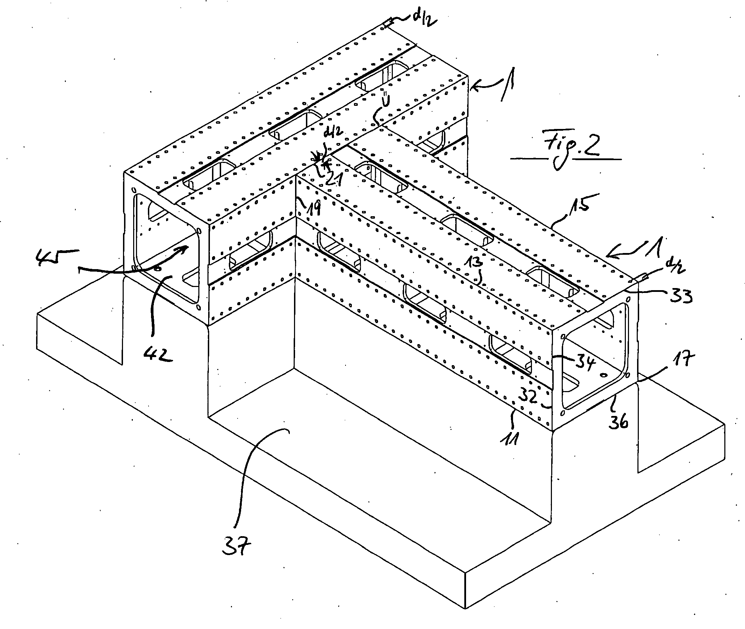

In Fig. 2 ist eine sogenannte T-Anordnung zweier identischer Halterungsmodule der in Fig. 1 gezeigten Art dargestellt. Diesbezüglich ist noch darauf hinzuweisen, dass die den Kanten 11, 13, 15 17, 19, 21, 23, 32, 33, 34, 36 des betreffenden Halterungsmoduls jeweils unmittelbar benachbarten Löcher zu der betreffenden Kante den halben Lochabstand d/2 haben, so dass das Rastermaß am Übergang Ü zwischen den beiden Halterungsblöcken fortgesetzt wird.

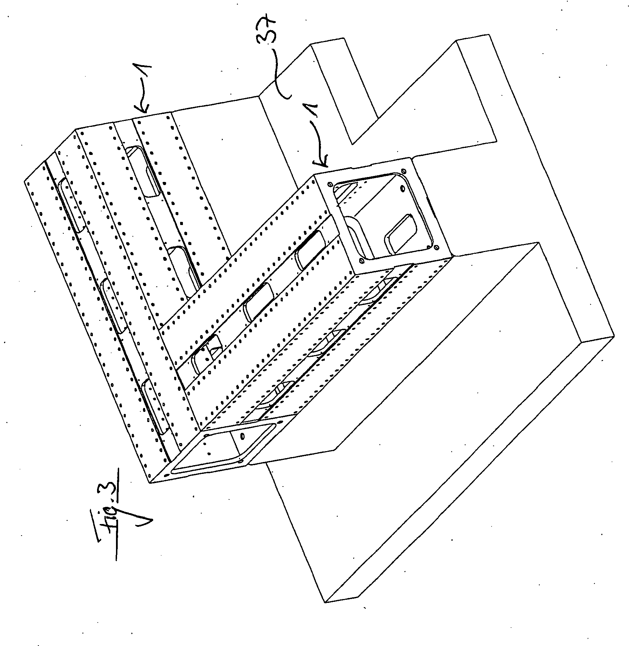

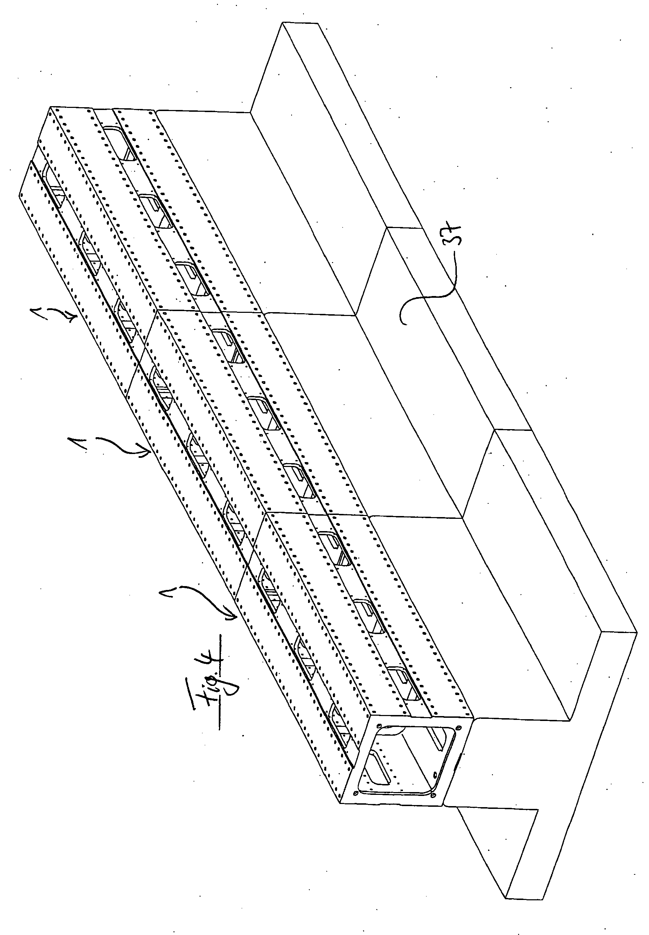

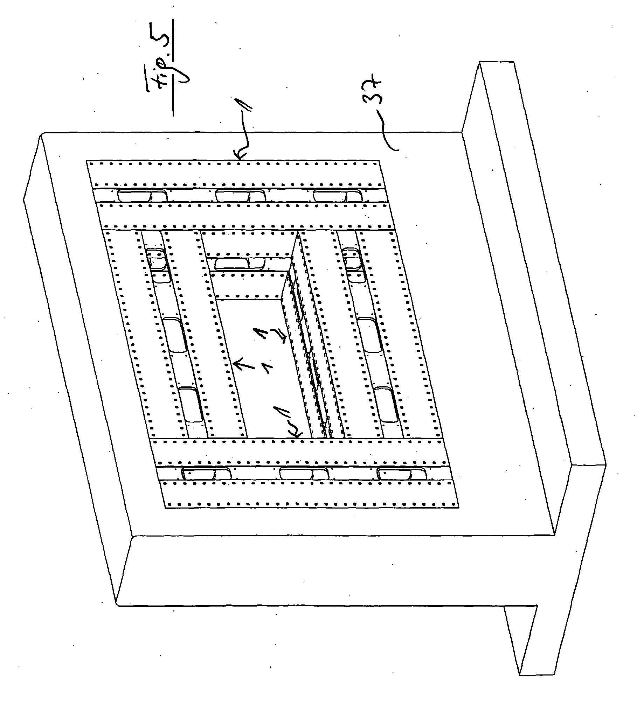

Dies gilt auch in der Über-Eck-Winkelanordnung zweier identischer Halterungsmodule gemäß Fig. 3 und für eine Reihenanordnung von z.B. drei identischen Halterungsmodulen gemäß Fig. 4. Weitere mögliche Kombinationen wären z.B. eine Z-Anordnung oder eine U-Anordnung oder eine □-Anordnung. Eine □-Anordnung in vertikaler Aufstellung zeigt Fig. 5. Darin ist auch zu erkennen, dass Halterungsmodule 1 in aufrecht stehender Anordnung und in liegender Anordnung montiert sein können. Grundsätzlich wäre es auch möglich, das Halterungssystem orthogonal zu der von den Halterungsmodulen 1 aufgespannten Rechteckebene durch Anbau von weiteren Halterungsmodulen 1 quer dazu räumlich fortzusetzen. Durch Keiladapter oder dgl. könnten auch schräge Abzweigungen, also nicht rechtwinklige Abzweigungen, gebildet werden.

Die Figuren 2 - 5 lassen erkennen, dass Halterungsmodule 1 nach der Erfindung in flexibler Weise zu unterschiedlich gestalteten Halterungssystemen kombiniert werden können, um Fertigungs- und/oder Montagekomponenten für jeweils spezifische Fertigungs- und/oder Montageaufgaben anzuordnen.

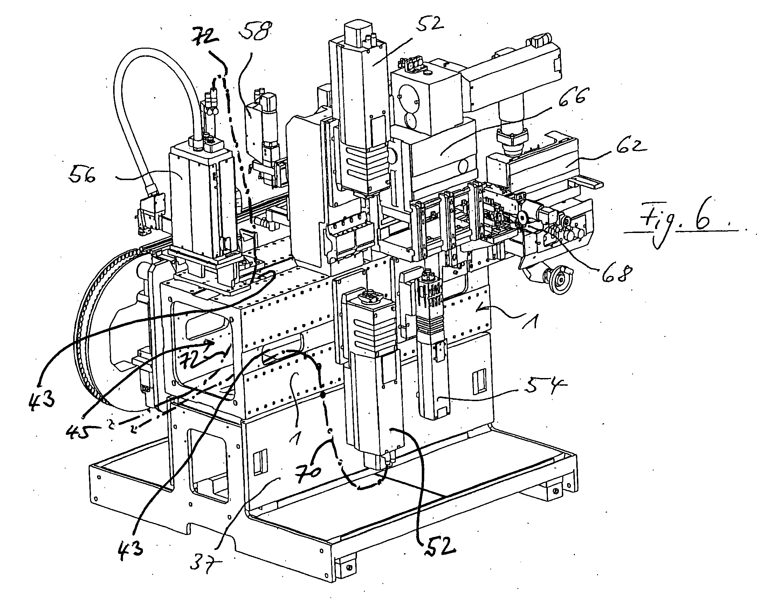

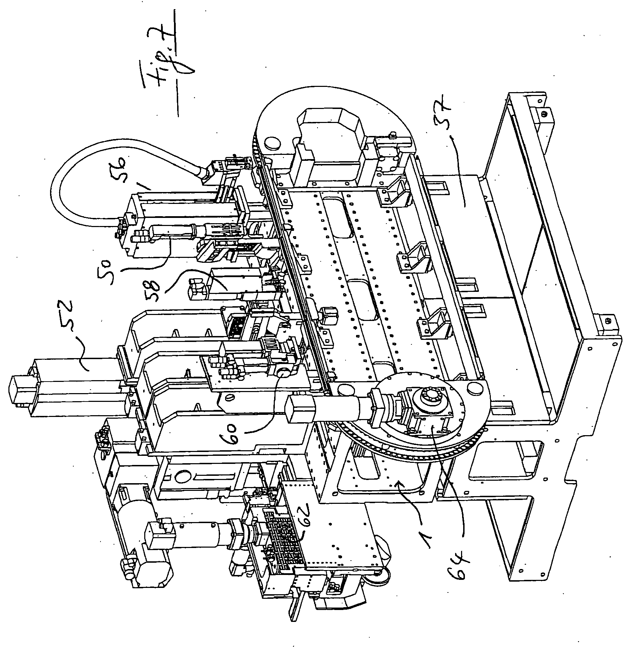

In den Figuren 6 und 7 ist eine Bearbeitungsanlage mit einem Halterungsmodul 1 nach der Erfindung perspektivisch mit Blick aus entgegengesetzten Richtungen dargestellt. Darin ist zu erkennen, dass verschiedene Fertigungs- und/oder Montagekomponenten in vorbestimmter Anordnung relativ zueinander an dem Halterungsmodul fixiert sind. Im Beispielsfall umfassen die Fertigungs- und/oder Montagekomponenten NC-Schlitten 50, 52, 54, ein NC-Pick- & Place-Modul 56, einen NC-Gewindeformer 58, einen NC-Schrauber 60, einen NC-Einzug 62, einen NC-Antrieb mit Transportband 64, eine NC-Presse 66 und einen NC-Antrieb mit Schweißgerät 68.

In den Figuren 6 und 7 sind Versorgungsleitungen der Fertigungs- und/oder Montagekomponenten (50 - 68) nicht konkret eingezeichnet, wenngleich sie bei einer betreffenden Bearbeitungsanlage der gezeigten Art vorhanden sind. Stellvertretend dafür sind in Figur 6 zwei von vielen Versorgungsleitungen schematisch durch eine jeweilige Strickpunktlinie bei 70 und 72 angedeutet. Sie sind an betreffenden Komponenten 52, 56 angeschlossen und durch ein jeweils nächst erreichbares Durchgriffsloch 43 in den Hohlraum 45 des Halterungsmoduls 1 geführt.

## Patentansprüche

1. Halterungsmodul für Fertigungs- und/oder Montagekomponenten (50) einer Bearbeitungsanlage, welches als prismatischer, insbesondere quaderförmiger Hohlblock ausgebildet ist, der einander entgegengesetzte Grundseiten (27, 29), Prismenseitenflächen (3, 5, 7) zwischen den Grundseiten (27, 29) und einen sich von Grundseite (27) zu Grundseite (29) erstreckenden Hohlraum aufweist, wobei die Prismenseitenflächen (3, 5, 7) von Prismenseitenkanten (11, 13, 15,17) und die Grundseiten von quer zu den Prismenseitenkanten verlaufenden Prismengrundkanten (19, 21, 23, 32, 33, 34) begrenzt sind, wobei an mehreren Prismenseitenflächen (3, 5, 7) ein vorbestimmtes Befestigungsraster von präparierten Befestigungsstellen (31) für den Anbau der Komponenten (50, 52, 54, 56, 58, 60, 62, 64, 66, 68) vorhanden ist, welches wenigstens eine sich parallel zu einer Prismenseitenkante (11, 13, 15, 17) des Halterungsmoduls (1) erstreckende Reihe von Befestigungslöchern (31) mit einem vorbestimmten Lochabstand (d) voneinander aufweist, wobei ferner in jeder der mit dem vorbestimmten Befestigungsraster versehenen der Prismenseitenflächen (3, 5, 7) wenigstens ein von den Befestigungsstellen (31) gesondertes in den Hohlraum mündendes Durchgriffsloch (43) vorgesehen ist, **dadurch gekennzeichnet, dass** jede Prismenkante (11, 13, 15, 17, 19, 21, 23, 33, 34) in ihrer jeweiligen Länge einem ganzzahligen Vielfachen des den vorbestimmten Lochabstand (d) entsprechenden kleinsten Rastermaßes des Befestigungsrasters entspricht, dass die den Prismengrundkanten (19, 21, 23, 32, 33, 34) des Halterungsmoduls (1) nächstliegenden Befestigungslöcher des Befestigungsrasters einen halben Lochabstand (d/2) zu den betreffenden Prismengrundkanten haben und dass auch der Abstand der randständigen Befestigungslochreihen von der jeweiligen nächst benachbarten Prismenseitenkante (11, 13, 15, 17) dem halben Lochabstand (d/2) entspricht, wobei das Halterungsmodul (1) so gestaltet ist, dass es mit wenigstens einem identischen Halterungsmodul (1) in unterschiedlichen auswählbaren Positionen, insbesondere in einer Reihenanordnung, einer Über-Eck-Anordnung oder einer T-Anordnung, zu einem modularen Halterungssystem zusammenfügbar ist, wobei ein Befestigungsraster von Befestigungsstellen (31) des Halterungsmoduls systematisch an ein Befestigungsraster von Befestigungsstellen (31) des identischen anderen Halterungsmoduls (1) unter Aufrechterhaltung eines bestimmten Befestigungsrastermaßes (d) am Übergang zwischen den Halterungsmodulen anschließbar ist.

2. Halterungsmodul nach Anspruch 1, **dadurch gekennzeichnet, dass** es an wenigstens einer Grundseite (27, 29), insbesondere an beiden Grundseiten zum Hohlraum hin offen ist.

3. Halterungsmodul nach Anspruch 2, **dadurch gekennzeichnet, dass** die Befestigungsstellen (31) zusätzlich zu Befestigungslöchern (31) Befestigungsstifte oder/und Befestigungshaken oder/und Spannelemente umfassen.

4. Halterungsmodul nach Anspruch 1, 2 oder 3, **dadurch gekennzeichnet, dass** es an drei Prismenseitenflächen (3, 5, 7) ein vorbestimmtes Befestigungsraster von präparierten Befestigungsstellen (31) für den Anbau der Komponenten (50) hat und ferner in jeder dieser Prismenseitenflächen (3, 5, 7) jeweils wenigstens ein von den Befestigungsstellen gesondertes, in den Hohlraum mündendes Durchgriffsloch (43), insbesondere ein Raster aus mehreren in den Hohlraum mündenden Durchgriffslöchern (43) aufweist.

5. Halterungsmodul nach Anspruch 4, **dadurch gekennzeichnet, dass** die Befestigungsraster von präparierten Befestigungsstellen (31) an wenigstens zwei, insbesondere an allen damit ausgestatteten Prismenseitenflächen (3, 5, 7) gleich sind.

6. Halterungsmodul nach Anspruch einem der vorhergehenden Ansprüche, **dadurch gekennzeichnet, dass** das Befestigungsraster mindestens vier sich parallel zur einer Prismenseitenkante (11, 13, 15, 17) des Halterungsmoduls (1) erstreckende Reihen von Befestigungslöchern (31) aufweist und das diese Befestigungslochreihen symmetrisch in Bezug auf eine zu den Prismenseitenkanten (11, 13, 15, 17) parallele Mittelebene verlaufen, die die mit den Befestigungslochreihen versehene Prismenseitenfläche (3, 5, 7) mittig teilt und orthogonal dazu verläuft.

7. Halterungsmodul nach einem der vorhergehenden Ansprüche, **dadurch gekennzeichnet, dass** die Prismenseitenkanten (11, 13, 15, 17) um ein ganzzahliges Vielfaches länger sind als die Prismengrundkanten (19, 21, 23, 32, 33, 34) und dass die Länge der Prismenseitenkanten einem ganzzahligen Vielfachen des Befestigungsrastermaßes (d) bzw. des dem Befestigungsrastermaß entsprechenden Lochabstandes (d) entspricht.

8. Halterungsmodul nach einem der Ansprüche 6 oder 7, **dadurch gekennzeichnet, dass** der Abstand (e) zwischen Lochreihen des Befestigungsrasters einem ganzzahligen Vielfachen des dem Befestigungsrastermaß (d) entsprechenden Lochabstandes (d) entspricht

9. Halterungsmodul nach einem der vorhergehenden Ansprüche, **dadurch gekennzeichnet, dass** die Prismenseitenflächen (3, 5, 7, 9) eine sich parallel zu den sie begrenzenden Prismenseitenkanten (11, 13, 15, 17) erstreckende mittige Lochreihe aus Durchgriffslöchern (43) aufweisen.

10. Halterungsmodul nach Anspruch 9, **dadurch gekennzeichnet, dass** die jeweilige mittige Lochreihe aus Durchgriffslöchern (43) in einer sich parallel zu den Prismenseitenkanten (11, 13, 15, 17) erstreckenden mittigen Außennut (41) in der betreffenden Prismenseitenfläche (3, 5, 7, 9) liegt.

11. Halterungsmodul nach einem der vorhergehenden Ansprüche, **dadurch gekennzeichnet, dass** die Durchgriffslöcher einen Mindestdurchmesser von mehr als 0,07 m haben.

12. Bearbeitungsanlage mit einem modularen Halterungssystem aus wenigstens einem Halterungsmodul (1) nach einem der vorher gehenden Ansprüche, einem Basisrahmen, (37) an dem das Halterungsmodul (1) in vorbestimmter Ausrichtung fixiert ist, und mit Fertigungs- und/oder Montagekomponenten (50-68), die an präparierten Befestigungsstellen (31) des Halterungsmoduls (1) in vorbestimmter Anordnung betriebsbereit montiert sind, wobei zumindest einige Fertigungs- und/oder Montagekomponenten (50-68) an Versorgungsleitungen angeschlossen sind, welche durch Durchgriffsöffnungen (43) des Halterungsmoduls hindurch in den Hohlraum geführt sind.

13. Bearbeitungsanlage nach Anspruch 12, **dadurch gekennzeichnet, dass** die Fertigungs- und/oder Montagekomponenten (50-68) NC-Fertigungs- und Montagemodule umfassen.

14. Bearbeitungsanlage nach Anspruch 12 oder 13, **dadurch gekennzeichnet, dass** die Fertigungs- und/oder Montagekomponenten (50-68) Module aus der folgenden Gruppe umfassen:
Schweißmodul,
Gewindeformungsmodul,
Schraubmodul,
Zuführmodul,
Einzugsmodul,
Pick- & Place-Modul,
Bearbeitungslaser,
Presse,
Kaltumformungsmodul, insbesondere Biegemodul oder Stanzmodul, Isoliermodul,
Abisoliermodul,
Lötmodul,
Klebemodul,
Kunststoffspritzmodul,
Beschriftungsmodul,
Messmodul,
Kameramodul,
Kontrollmodul.

15. Bearbeitungsanlage nach einem der Ansprüche 12 bis 14, **dadurch gekennzeichnet, dass** sie mehrere zu einem Halterungssystem kombinierte Halterungsmodule (1) nach einem der Ansprüche 1 bis 11 umfasst.

## Claims

1. Support module for production components and/or assembly components (50) of a processing unit, formed as a prismatic, in particular cuboid hollow block, which comprises mutually opposing base faces (27, 29), prism side faces (3, 5, 7) between the base faces (27, 29), and a hollow space extending from base face (27) to base face (29), the prism side faces (3, 5, 7) being defined by prism side edges (11, 13, 15, 17) and the prism base faces being defined by prism base edges (19, 21, 23, 32, 33, 34) extending transverse to the prism side edges, a predefined fastening grid of prepared fastening points (31) being provided for mounting the components (50, 52, 54, 56, 58, 60, 62, 64, 66, 68), comprising at least one row of fastening holes (31) with a predetermined mutual hole spacing (d), extending parallel to a prism side edge (11, 13, 15, 17) of the support module (1), at least one passage hole (43) opening into the hollow space and separated from the fastening points (31) being furthermore provided in each of the prism side edges (11, 13, 15, 17), provided with the mounting grid, **characterized in that** each prism edge (11, 13, 15, 17, 19, 21, 23, 33, 34) in its corresponding length corresponds to a whole multiple of the smallest grid dimension of the fastening grid corresponding to the predefined hole spacing (d), **in that** the fastening holes of the fastening grid positioned closest to the prism base edges (19, 21, 23, 32, 33, 34) of the support module (1) have a half hole spacing (d/2) from the respective prism base edges, and **in that** the spacing of the edge rows of fastening holes from the respective closest adjacent prism side edge (11, 13, 15, 17) correspond to the half hole spacing (d/2), said support module (1) being configured in such a way that it can be joined together with at least one identical support module (1) in different selectable positions, in particular in a row arrangement, an across-the-corner arrangement or a T-arrangement, to form a modular support system, wherein a fastening grid of fastening points (31) of the support module can be connected systematically to a fastening grid of fastening points (31) of the other identical support module (1) while maintaining a particular fastening grid dimension (d) at the transition between the support modules.

2. Support module according to claim 1, **characterized in that** it is open towards the hollow space on at least one base face (27, 29), in particular at both base faces.

3. Support module according to claim 2, **characterized in that** the fastening points (31) comprise fastening pins and/or fastening hooks and/or clamping elements in addition to the fastening holes (31).

4. Support module according to claim 1, 2 or 3, **characterized in that** it comprises a predetermined fastening grid of prepared fastening points (31) for mounting the components (50) on three prism side faces (3, 5, 7), and furthermore comprises in each of these prism side faces (3, 5, 7) at least one passage hole (43), separate from the fastening points, opening into said hollow space, in particular a grid of a plurality of passage holes (43) opening into the hollow space.

5. Support module according to claim 4, **characterized in that** the fastening grids of prepared fastening points (31) are the same on at least two, in particular all, of the prism side faces (3, 5, 7) equipped therewith.

6. Support module according to one of the preceding claims, **characterized in that** the fastening grid comprises at least four rows of fastening holes (31) extending parallel to a prism side edge (11, 13, 15, 17) of the support module (1), and **in that** these rows of fastening holes extend symmetrically about a central plane which is parallel to the prism side edges (11, 13, 15, 17) and which centrally divides and extends orthogonal to the prism side face (3, 5, 7) provided with the rows of fastening holes.

7. Support module according to one of the preceding claims, **characterized in that** the prism side edges (11, 13, 15, 17) are longer by a whole multiple than the prism base edges (19, 21, 23, 32, 33, 34), and **in that** the length of the prism side edges corresponds to a whole multiple of the fastening grid dimension (d) or the hole spacing (d) corresponding to the fastening grid dimension.

8. Support module according to any one of claims 6 or 7, **characterized in that** the spacing (e) between rows of holes of the fastening grid corresponds to a whole multiple of the hole spacing (d) corresponding to the fastening grid dimension (d).

9. Support module according to one of the preceding claims, **characterized in that** the prism side faces (3, 5, 7, 9) comprise a central hole row of passage holes (43) extending parallel to the prism side edges (11, 13, 15, 17) defining the latter.

10. Support module according to claim 9, **characterized in that** the respective central hole row of passage holes (43) is positioned in a central external groove (41), extending parallel to the prism side edges (11, 13, 15, 17), in the respective prism side face (3, 5, 7, 9).

11. Support module according to one of the preceding claims, **characterized in that** the passage holes have a smallest diameter of more than 0.07 m.

12. Processing unit comprising a modular support system comprising at least a modular support module (1) according to one of the preceding claims, a base frame (37) to which the support module (1) is fixed in a predetermined orientation, and comprising production components and/or assembly components (50-68), which are mounted ready for operation in a predetermined arrangement at prepared fastening points (31) of the support module (1), at least some production components and/or assembly components (50-68) being connected to supply lines, which are passed into the hollow space through passage openings (43) of the support module.

13. Processing unit according to claim 12, **characterized in that** the production components and/or assembly components (50-68) comprise NC production modules and assembly modules.

14. Processing unit according to claim 12 or 13, **characterized in that** the production components and/or assembly components (50-68) comprise modules from the following group:
welding module,
thread-forming module,
screwing module,
feed module,
infeed module
pick-and-place module,
machining laser,
press,
cold-forming module, in particular a bending module or a punching module,
insulating module,
stripping module,
soldering module,
gluing module,
plastics material extrusion module,
inscription module,
measuring module,
camera module,
control module.

15. Processing unit according to any one of claims 12 to 14, **characterized in that** it comprises a plurality of support modules (1) according to any one of claims 1 to 11, combined to form a support system.

## Revendications

1. Module de support pour des composants de production et/ou de assemblage (50) d'une unité de traitement, formé sous forme d'un bloc creux prismatique, en particulier parallélépipédique, comprenant des côtés de base (27, 29) opposés l'un à l'autre, des surfaces latérales du prisme (3, 5, 7) entre les côtés de base (27, 29), et un espace creux s'étendant d'un côté de base (27) au côté de base (29), les surfaces latérales du prisme (3, 5, 7) étant définies par des bords latéraux du prisme (11, 13, 15, 17) et les côtés de base étant définis par des bords de base du prisme (19, 21, 23, 32, 33, 34) s'étendant transversalement au bords latéraux du prisme, une grille de fixation prédéfinie de points de fixation (31) préparés étant prévue pour monter les composants (50, 52, 54, 56, 58, 60, 62, 64, 66, 68), comprenant au moins une rangée de trous de fixation (31) avec un espacement des trous (d) prédéterminé s'étendant de façon parallèle à un bord latéral du prisme (11, 13, 15, 17) du module de support (1), un trou de passage (43) séparé des points de fixation (31) et s'ouvrant dans l'espace creux étant en outre prévu dans chacune des surfaces latérales du prisme (3, 5, 7) munies de la grille de fixation prédéterminée, **caractérisé en ce que** chaque bord du prisme (11, 13, 15, 17, 19, 21, 23, 33, 34) correspond dans sa longueur à un multiple entier de la plus petite dimension de grille de la grille de fixation correspondant à l'espacement des trous (d), **en ce que** les trous de fixation de la grille de fixation positionnés le plus proche des bords de base du prisme (19, 21, 23, 32, 33, 34) du module de support (1) ont un demi espacement des trous (d/2) aux bords de base respectifs du prisme et **en ce que** l'espacement des rangées de trous de fixation de bord du bord latéral du prisme (11, 13, 15, 17) adjacent le plus proche correspond au demi espacement des trous (d/2), le module de support (1) étant configuré de sorte qu'il puisse être associé à au moins un module de support (1) identique dans des positions différentes à choisir, en particulier un arrangement de rangée, un arrangement d'angle ou un arrangement T, pour former un système de support modulaire, une grille de fixation de points de fixation (31) du module de support pouvant être connectée systématiquement à une grille de fixation de points de fixation (31) de l'autre module de support (1) identique, tout en maintenant une certaine dimension de grille de fixation (d) à la transition entre les modules de support.

2. Module de support selon la revendication 1, caractérisé en en ce qu'il est ouvert envers l'espace creux à au moins un côté de base (27, 29), en particulier aux deux côtés de base.

3. Module de support selon la revendication 2, **caractérisé par** les points de fixation (31) comprenant en outre les trous de fixation (31) des goupilles de fixation ou/et des crochets de fixation ou/et des éléments de serrage.

4. Module de support selon les revendications 1, 2 ou 3, **caractérisé en ce qu'**il comprend à trois surfaces latérales du prisme (3, 5, 7) une grille de fixation prédéterminée de points de fixation (31) préparés pour monter les composants (50) et **en ce qu'**il comprend dans chacune de ces surfaces latérales du prisme (3, 5, 7) au moins un trou de passage (43) séparé des points de fixation (31) et s'ouvrant dans l'espace creux, en particulier une grille de plusieurs trous de passage (43) s'ouvrant dans l'espace creux.

5. Module de support selon la revendication 4, **caractérisé par** les grilles de fixation de points de fixation (31) préparés sont les mêmes à au moins deux et en particulier à toutes les surfaces latérales du prisme (3, 5, 7) équipées avec ces dernières.

6. Module de support selon une des revendications précédentes, **caractérisé par** la grille de fixation comprenant au moins quatre rangées de trous de fixation (31) s'étendant parallèlement à un bord latéral du prisme (11, 13, 15, 17) du module de support (1) et par ces rangées de trous de fixation étant symétriques par rapport à un plan médian parallèle aux bords latéraux du prisme (11, 13, 15, 17) divisant centralement et s'étendant d'une manière orthogonale à la surface latérale du prisme (3, 5, 7) munie des rangées de trous de fixation.

7. Module de support selon une des revendications précédentes, **caractérisé par** les bords latéraux du prisme (11, 13, 15, 17) étant plus longs d'un multiple entier que les bords de base du prisme (19, 21, 23, 32, 33, 34) et par la longueur des bords latéraux du prisme correspondant à un multiple entier de la dimension de la grille de fixation (d) ou de l'espacement des trous (d) correspondant à la dimension de la grille de fixation.

8. Module de support selon une des revendications 6 ou 7, **caractérisé par** la distance (e) entre les rangées de trous de la grille de fixation correspondant à un multiple entier de l'espacement des trous (d) correspondant à la dimension de la grille de fixation (d).

9. Module de support selon une des revendications précédentes, **caractérisé par** les surfaces latérales du prisme (3, 5, 7, 9) comprenant une rangée centrale de trous formée de trous de passage (43) qui s'étend de façon parallèle aux bords latéraux du prisme (11, 13, 15, 17) qui les limitent.

10. Module de support selon la revendication 9, **caractérisé par** la rangée centrale de trous formée de trous de passage (43) étant positionnée dans une rainure centrale extérieure (41) dans la surface latérale respective du prisme (3, 5, 7, 9) qui s'étend de façon parallèle aux bords latéraux du prisme (11, 13, 15, 17).

11. Module de support selon une des revendications précédentes, **caractérisé par** les trous de passage ayant un diamètre minimum de plus de 0,07 m.

12. Unité de traitement avec un système de support modulaire comprenant au moins un module de support (1) selon une des revendications précédentes, un châssis de base (37) auquel le module de support (1) est fixé dans une orientation prédéterminée et avec des composants de production et/ou d'assemblage (50-68), montés à des points de fixation (31) préparés du module de support (1) dans un arrangement prédéterminé et opératoire, au moins quelques-uns des composants de production et/ou d'assemblage (50-68) étant connectés à des conduites d'alimentation passant à travers les ouvertures de passage (43) du module de support dans l'espace creux.

13. Unité de traitement selon la revendication 12, **caractérisé par** les composants de production et/ou d'assemblage (50-68) comprenant des modules de production et d'assemblage CN.

14. Unité de traitement selon la revendication 12 ou 13, **caractérisé par** les composants de production et/ou d'assemblage (50-68) comprenant des modules du groupe suivant:
module de soudage,
module de formation de filetage,
module de vissage,
module d'alimentation,
module d'introduction
module de pick & place,
laser de traitement,
presse,
module de formage à froid, en particulier un module de flexion ou un module d'estampage,
module d'isolation,
module de dénudage
module de brasage,
module de collage,
module d'extrusion de matière plastique,
module d'étiquetage,
module de mesure,
module caméra,
module de contrôle.

15. Unité de traitement selon une des revendications 12 à 14, **caractérisé en ce qu'**elle comprend plusieurs modules de support (1) selon une des revendications 1 à 11, combinés pour former un système de support.
